# EUROPEAN PATENT APPLICATION

(11) **EP 3 072 587 A1**
(43) Date of publication of application: **28.09.2016**
(21) Application number: 14863486.8
(22) Date of filing: 25.11.2014
(51) Int. Cl.: B01J 23/63, B01D 53/94, B01J 35/04, B01J 37/02

(54) **CATALYST FOR EXHAUST GAS PURIFICATION**

(30) Priority: 22.11.2013 JP 2013241959
(71) Applicant: Cataler Corporation, Shizuoka 437-1492 (JP)
(72) Inventor: GOTO Takashi, Kakegawa-shi Shizuoka 437-1492 (JP); TAKI Kenichi, Kakegawa-shi Shizuoka 437-1492 (JP); MATSUEDA Satoshi, Kakegawa-shi Shizuoka 437-1492 (JP)
(74) Representative: Kuhnen & Wacker
(86) International application number: PCT/JP2014/081034
(87) International publication number: WO 2015/076403

(57) **Abstract**

An object of the present invention is to provide a catalyst for exhaust gas purification, by which exhaust gas can be efficiently purified within a wide temperature range from low to high temperatures. This object can be achieved by using a catalyst for exhaust gas purification, containing a substrate, a lower layer disposed on the substrate, and an upper layer disposed on the lower layer, wherein the lower layer contains: a lower catalytic layer that contains a first material having oxygen storage/release capacity and a first catalytic metal supported on the first material; and a non-catalytic layer that contains a second material having oxygen storage/release capacity but does not contain catalytic metal; in which the lower catalytic layer and the non-catalytic layer are laminated in any order; and an upper catalytic layer that contains a second catalytic metal.

## Description

### Technical Field

The present invention relates to a catalyst for exhaust gas purification.

### Background Art

Exhaust gas discharged from an internal combustion engine such as an engine contains hazardous substances such as hydrocarbons (HC), carbon monoxide (CO), and nitrogen oxides (NOx). These substances cause air pollution, and thus exhaust gas purification is necessary.

Exhaust gas can be purified using a catalyst for exhaust gas purification. Such a catalyst for exhaust gas purification is generally composed of a substrate and a catalytic layer disposed on the substrate, wherein the catalytic layer contains a support and a catalytic metal supported on the support. As a catalytic metal, a noble metal such as platinum, palladium, or rhodium is generally used.

For efficient purification of exhaust gas, it is effective to control the amount of oxygen in the vicinity of a catalytic metal within a certain range. For this purpose, as a support, a material having oxygen storage/release capacity (OSC) such as a cerium-zirconium composite oxide (hereinafter, referred to as an "OSC material") is used (for example, Patent Documents 1 to 3).

A cerium-zirconium composite oxide stores oxygen via oxidation of cerium from trivalent to tetravalent under excess oxygen conditions. On the other hand, under oxygen deficient conditions, it releases oxygen via reduction of cerium from tetravalent to trivalent. This suppresses atmosphere variations in the vicinity of the catalytic metal, enabling efficient purification of exhaust gas.

### Prior Art Documents

### Patent Documents

Patent Document 1: JP Patent Publication (Kokai) No. H08-215569 A (1996)
Patent Document 2: JP Patent Publication (Kokai) No. H11-165067 A (1999)
Patent Document 3: JP Patent Publication (Kokai) No. 2003-265958 A

### Summary of the Invention

### Technical Problem

The temperature of exhaust gas changes over a wide range from low to high temperatures. At the timing of engine start, since the temperature of exhaust gas is low and a catalyst for exhaust gas purification is not sufficiently activated, sufficient exhaust gas purification is difficult. Therefore, a conventional catalyst for exhaust gas purification is designed to exert OSC when the exhaust gas temperature is low. However, exertion of OSC with exhaust gas at a low temperature causes a problem in later stage such that OSC is not exerted anymore even when the exhaust gas temperature increases. As a result, the sufficient purification of exhaust gas within a high temperature range becomes difficult.

Hence, an object of the present invention is to provide a catalyst for exhaust gas purification, by which exhaust gas can be efficiently purified within a wide temperature range from low to high temperatures.

### Means for Solving the Problem

As a result of intensive studies, the present inventors have discovered that exhaust gas can be efficiently purified within a wide temperature range by disposing a plurality of layers, that are capable of exerting OSC in different temperature ranges, on a substrate. The present inventors have further discovered that, an OSC material supporting a catalytic metal exerts OSC within a low temperature range while an OSC material not supporting catalyst exerts OSC within a high temperature range.

Specifically, the present invention includes the following [1] to [6]
[1] A catalyst for exhaust gas purification, containing a substrate, a lower layer disposed on the substrate, and an upper layer disposed on the lower layer, wherein
   the lower layer contains:
   a lower catalytic layer that contains a first material having oxygen storage/release capacity and a first catalytic metal supported on the first material, and
   a non-catalytic layer that contains a second material having oxygen storage/release capacity but does not contain a catalytic metal,
   in which the lower catalytic layer and the non-catalytic layer are laminated in any order; and
   the upper layer contains an upper catalytic layer that contains a second catalytic metal.
[2] The catalyst for exhaust gas purification according to [1], wherein the non-catalytic layer is disposed on the lower catalytic layer.
[3] The catalyst for exhaust gas purification according to [1], wherein the lower catalytic layer is disposed on the non-catalytic layer.
[4] The catalyst for exhaust gas purification according to any one of [1] to [3], wherein the first material having oxygen storage/release capacity and the second material having oxygen storage/release capacity are materials each having a pyrochlore structure.
[5] The catalyst for exhaust gas purification according to [4], wherein the materials each having a pyrochlore structure are cerium-zirconium composite oxides.
[6] The catalyst for exhaust gas purification according to any one of [1] to [5], wherein the first catalytic metal is rhodium, and the second catalytic metal is palladium and/or platinum.

This description incorporates the content of the description and/or drawings of Japanese Patent Application No. 2013-241959, for which priority is claimed to the present application.

### Effect of the Invention

According to the present invention, a catalyst for exhaust gas purification, by which exhaust gas is efficiently purified within a wide temperature range from low to high temperatures, can be provided.

### Brief Description of the Drawings

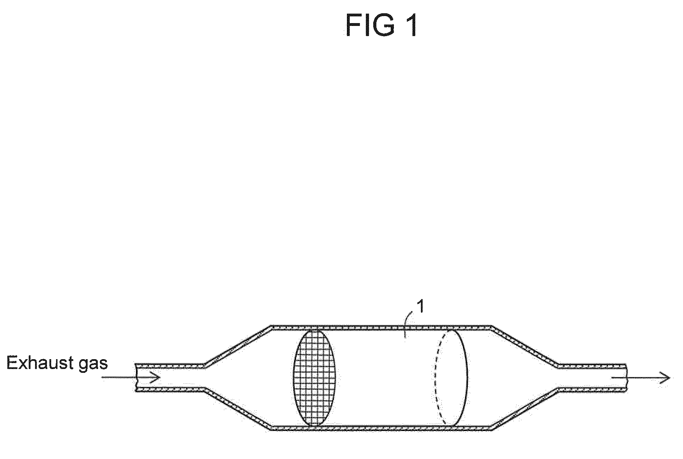

Fig. 1 shows an example of the catalyst for exhaust gas purification.
Fig. 2 shows a portion of a cross section of the catalyst for exhaust gas purification.
Fig. 3 shows a portion of a cross section of the catalyst for exhaust gas purification.
Fig. 4 shows the relationship between the weight ratios of the first OSC material to the second OSC material, and HC purification rates.
Fig. 5 shows the relationship between temperatures and OSC.

### Embodiments for Carrying Out the Invention

Hereafter, the present invention is described in detail.

The present invention relates to a catalyst for exhaust gas purification, which comprises a substrate, a lower layer disposed on the substrate, and an upper layer disposed on the lower layer, in which the lower layer contains:
a lower catalytic layer that contains a first material having oxygen storage/release capacity (hereinafter, referred to as the "first OSC material") and a first catalytic metal supported on the first OSC material, and
a non-catalytic layer that contains a second material having oxygen storage/release capacity (hereinafter, referred to as the "second OSC material") but contains no catalytic metal,
in which the lower catalytic layer and the non-catalytic layer are laminated in any order; and
the upper layer contains an upper catalytic layer that contains a second catalytic metal.

The catalyst for exhaust gas purification according to the present invention contains the first OSC material on which the first catalytic metal is supported and the second OSC material on which no catalytic metal is supported. The OSC material supporting the catalytic metal exerts OSC within a low temperature range. On the other hand, the OSC material not supporting catalytic metal exerts OSC within a high temperature range. Accordingly, the catalyst for exhaust gas purification according to the present invention exerts OSC within low and high temperature ranges.

In addition, even when a catalytic metal is not supported on an OSC material, a temperature at which OSC is exerted will decrease if a catalytic metal is present in the vicinity of the OSC material. Hence, in the catalyst for exhaust gas purification according to the present invention, the second OSC material not supporting catalytic metal and the first OSC material supporting the first catalytic metal are present in different layers. Moreover, a layer containing the second OSC material contains no catalytic metal. Thereby exhaust gas can be efficiently purified within a wide temperature range from low to high temperatures.

The term "low temperature range" as used herein refers to temperatures of lower than 500°C and the term "high temperature range" as used herein refers to temperatures of 500°C or higher.

Examples of a substrate of the catalyst for exhaust gas purification according to the present invention include substrates generally used in a catalyst for exhaust gas purification. The examples include straight flow type or wall flow type monolithic substrates. The material of the substrate is not particularly limited and examples thereof include ceramic, silicon carbide, and metal substrates.

A lower layer disposed on a substrate contains a lower catalytic layer and a non-catalytic layer. The lower catalytic layer contains a first OSC material and a first catalytic metal supported on the first OSC material. The non-catalytic layer contains a second OSC material but contains no catalytic metal. The lower catalytic layer contains the first OSC material on which the first catalytic metal is supported, so as to exert OSC within a low temperature range. On the other hand, the non-catalytic layer contains the second OSC material on which no catalytic metal is supported, so as to exert OSC within a high temperature range.

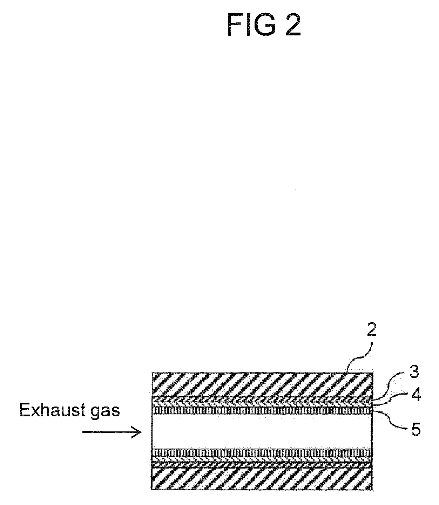

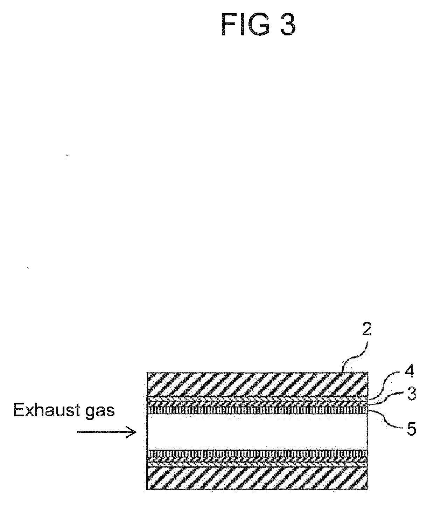

The lower catalytic layer and the non-catalytic layer can be laminated on a substrate in any order. In general, the layer disposed on the upper side tends to come into contact and react with exhaust gas so as to generate reaction heat. As a result, the layer disposed on the upper side is superior in warming up ability and easy to activate. Accordingly, for further improvement of purification performance within a high temperature range, a non-catalytic layer 4 exerting OSC within a high temperature range is preferably disposed on a lower catalytic layer 3 as shown in Fig. 2, for example. On the other hand, for more improvement of purification performance within a low temperature range, a lower catalytic layer 3 exerting OSC within a low temperature range is preferably disposed on a non-catalytic layer 4 as shown in Fig. 3, for example.

The thickness of the non-catalytic layer is not limited, preferably ranges from 10 µm to 50 µm, and particularly preferably ranges from 20 µm to 40 µm. The thickness of the non-catalytic layer is determined to be 10 µm, particularly 20 µm or more, so that a distance between the second OSC material contained in the non-catalytic layer and the first and the second catalytic metals contained in the lower catalytic layer and the upper catalytic layer can be ensured. Moreover, the thickness of the non-catalytic layer is determined to be 50 µm, particularly 40 µm or less, so that the passage and the discharge of exhaust gas through the non-catalytic layer containing no catalytic metal can be suppressed.

An upper layer disposed on a lower layer contains an upper catalytic layer containing a second catalytic metal. Since an layer disposed on upper side tends to come into contact with exhaust gas, the passage and the discharge of exhaust gas through the non-catalytic layer containing no catalytic metal can be suppressed by disposing the upper catalytic layer containing the second catalytic metal in upper side of the non-catalytic layer.

The thickness of the upper catalytic layer is not particularly limited, preferably ranges from 10 µm to 50 µm, and particularly preferably ranges from 20 µm to 40 µm. By setting the thickness of the upper catalytic laye to be 10 µm, particularly 20 µm or more, the second catalytic metal contained in the upper catalytic layer can be caused to sufficiently come into contact with exhaust gas. Moreover, by setting the thickness of the upper catalytic layer to be 50 µm, particularly 40 µm or less, the increase in pressure loss can be suppressed and sufficient diffusion of exhaust gas in the non-catalytic layer and the lower catalytic layer can further be achieved.

The lower catalytic layer and the upper catalytic layer contain the first catalytic metal and the second catalytic metal, respectively, so that exhaust gas can be purified. Examples of these catalytic metals include noble metals, and more specifically, rhodium, palladium, platinum, and the like.

The first catalytic metal and the second catalytic metal may be of the same type or of different types. One catalytic metal is preferably, but not particularly limited to, rhodium while the other catalytic metal is preferably palladium and/or platinum, and more preferably, one catalytic metal is rhodium and the other catalytic metal is palladium. Furthermore, the first catalytic metal is preferably rhodium and the second catalytic metal is preferably palladium and/or platinum, and more preferably, the first catalytic metal is rhodium while the second catalytic metal is palladium.

Since the lower catalytic layer and the non-catalytic layer contain the first OSC material on which the first catalytic metal is supported and the second OSC material on which no catalytic metal is supported, respectively, they are able to exert OSC within a wide temperature range from low to high temperatures. Examples of these OSC materials are not particularly limited, and known materials capable of storing and releasing oxygen can be used. Examples of these OSC materials include: ceria; cerium-zirconium composite oxide; and a composite oxide of cerium, zirconium, and at least one selected from the group consisting of hafnium, neodymium, yttrium, lanthanum, praseodymium, and nickel.

The first OSC material and the second OSC material are preferably a material having a pyrochlore structure. By having a pyrochlore structure, oxygen becomes easily released from the OSC materials, which enables quick response to atmosphere variations.

The first OSC material and the second OSC material may be of the same type or of different types. The first OSC material and the second OSC material are preferably of the same type, are more preferably materials each having a pyrochlore structure, and are particularly preferably cerium-zirconium composite oxides each having a pyrochlore structure, but the examples thereof are not particularly limited thereto. The weight ratio of cerium to zirconium in such a cerium-zirconium composite oxide is not particularly limited, as long as it allows the formation of a pyrochlore structure. Examples thereof include 45:55 to 55:45, and 50:50.

The weight ratio of the first OSC material to the second OSC material is not particularly limited, and preferably ranges from 1:2 to 2:1. By adjusting the weight ratio within the range, exhaust gas can be purified with good balance within a temperature range from low to high temperatures.

The sum of the contents of the first OSC material and the second OSC material is not particularly limited, preferably ranges from, 10 g to 100 g, more preferably ranges from 20 g to 80 g, and particularly preferably ranges from 30 g to 60 g per 0.635 L of a substrate.

The catalyst for exhaust gas purification according to the present invention is mainly composed of a substrate, a lower catalytic layer, a non-catalytic layer, and an upper catalytic layer, but may contain any layer at any position, as long as it does not impair the effect of the present invention. For example, another catalytic layer containing a catalytic metal may be disposed at any position. Furthermore, another non-catalytic layer containing an OSC material but not containing catalytic metal may be disposed at any position.

The lower catalytic layer, the non-catalytic layer, and the upper catalytic layer may contain any component, as long as it does not impair the effect of the present invention. For example, in addition to the first and the second OSC materials, another OSC material may also be contained. An example of such an OSC material is a cerium-zirconium composite oxide not having pyrochlore structure. Examples of the weight ratio of cerium to zirconium in such a cerium-zirconium composite oxide include 20-40:80-60, and 30-40:70-60.

An embodiment of the present invention is a catalyst for exhaust gas purification containing:
a substrate;
a lower catalytic layer disposed on the substrate, wherein the lower catalytic layer contains a first OSC material having a pyrochlore structure and rhodium supported on the first OSC material;
a non-catalytic layer disposed on the lower catalytic layer, wherein the non-catalytic layer contains a second OSC material having a pyrochlore structure, but contains no catalytic metal: and
an upper catalytic layer disposed on the non-catalytic layer, wherein the upper catalytic layer contains palladium and/or platinum (particularly, palladium).

Another embodiment of the present invention is a catalyst for exhaust gas purification containing:
a substrate;
a non-catalytic layer disposed on the substrate, wherein the non-catalytic layer contains a second OSC material having a pyrochlore structure, but contains no catalytic metal;
a lower catalytic layer disposed on the non-catalytic layer, wherein the lower catalytic layer contains a first OSC material having a pyrochlore structure and rhodium supported on the first OSC material; and
an upper catalytic layer disposed on the lower catalytic layer, wherein the upper catalytic layer contains palladium and/or platinum (particularly, palladium).

### Examples

Hereafter, the present invention is described in greater detail with reference to examples and comparative examples, however, the technical scope of the present invention is not limited to these examples.

### <Production of catalysts for exhaust gas purification>

### [Example 1]

(1) Rhodium (rhodium nitrate solution) (Rh: 0.3 g) was supported on a cerium-zirconium composite oxide having a pyrochlore structure (first OSC material) [Ce : Zr = 50 : 50 (weight ratio)] (20 g), thereby obtaining an Rh-supporting OSC material. The Rh-supporting OSC material, alumina (50 g), and a cerium-zirconium composite oxide not having pyrochlore structure [Ce : Zr = 30 : 70 (weight ratio)] (50 g) were mixed and milled, so that slurry for a lower catalytic layer [1-1] was obtained.
(2) Alumina (50 g), a cerium-zirconium composite oxide not having pyrochlore structure [Ce : Zr = 40 : 60 (weight ratio)] (50 g), and a cerium-zirconium composite oxide having a pyrochlore structure (second OSC material) [Ce : Zr = 50 : 50 (weight ratio)] (20 g) were mixed and milled to obtain slurry for a non-catalytic layer [1-2].
(3) A palladium nitrate solution (Pd : 5 g), alumina (50 g), and a cerium-zirconium composite oxide not having pyrochlore structure [Ce : Zr =40 : 60 (weight ratio)] (50 g) were mixed and milled to obtain slurry for an upper catalytic layer [1-3].
(4) A monolithic substrate (0.635 L) was coated with slurry for a lower catalytic layer [1-1], and dried at 250°C for 1 hour and then the resultant was calcined at 500°C for 1 hour to form a lower catalytic layer. The lower catalytic layer was coated with slurry for a non-catalytic layer [1-2] and dried at 250°C for 1 hour, and then the resultant was calcined at 500°C for 1 hour to form a non-catalytic layer. The non-catalytic layer was coated with slurry for an upper catalytic layer [1-3] and dried at 250°C for 1 hour, and then the resultant was calcined at 500°C for 1 hour to form an upper catalytic layer. Thus a catalyst for exhaust gas purification was produced.

### [Example 2]

A catalyst for exhaust gas purification was produced in a manner similar to that employed in Example 1, except that 30 g of the first OSC material and 10 g of the second OSC material were used.

### [Example 3]

A catalyst for exhaust gas purification was produced in a manner similar to that employed in Example 1, except that 26 g of the first OSC material and 13 g of the second OSC material were used.

### [Example 4]

A catalyst for exhaust gas purification was produced in a manner similar to that employed in Example 1, except that 10 g of the first OSC material and 30 g of the second OSC material were used.

### [Example 5]

A catalyst for exhaust gas purification was produced in a manner similar to that employed in Example 1, except that 13 g of the first OSC material and 26 g of the second OSC material were used.

### [Example 6]

A catalyst for exhaust gas purification was produced in a manner similar to that employed in Example 1, except that the order of coatings of the slurry for lower catalytic layer [1-1] and the slurry for non-catalytic layer [1-2] in Example 1 was reversed.

### [Example 7]

A catalyst for exhaust gas purification was produced in a manner similar to that employed in Example 1, except that a cerium-zirconium composite oxide not having pyrochlore structure was used as the first OSC material of Example 1.

### [Example 8]

A catalyst for exhaust gas purification was produced in a manner similar to that employed in Example 1, except that a cerium-zirconium composite oxide not having pyrochlore structure was used as the second OSC material of Example 1.

### [Example 9]

A catalyst for exhaust gas purification was produced in a manner similar to that employed in Example 1, except that a cerium-zirconium composite oxide not having pyrochlore structure was used as the first OSC material of Example 1 and a cerium-zirconium composite oxide not having pyrochlore structure was used as the second OSC material of Example 1.

### [Comparative example 1]

A catalyst for exhaust gas purification was produced in a manner similar to that employed in Example 1, except that the second OSC material was not added to slurry for a non-catalytic layer [1-2] of Example 1.

### [Comparative example 2]

A catalyst for exhaust gas purification was produced in a manner similar to that employed in Example 1, except that the first OSC material was not added to slurry for a lower catalytic layer [1-1] of Example 1.

### <Exhaust gas purification test>

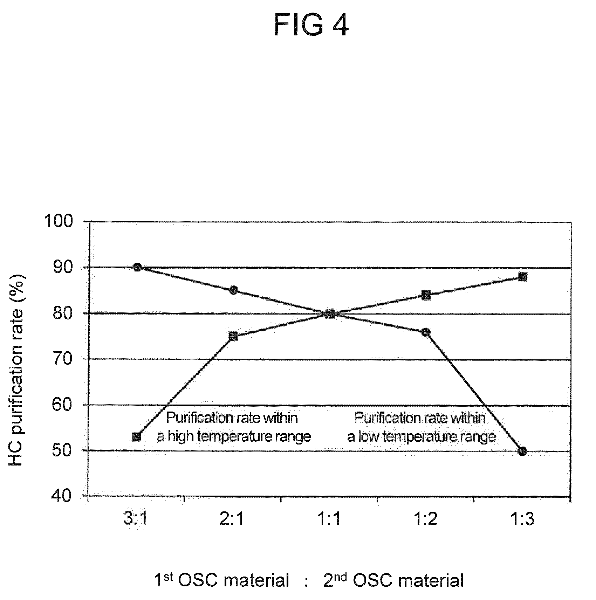

A durability test corresponding to driving of 150,000 miles was conducted for each of the catalysts for exhaust gas purification produced in examples and comparative examples (φ103×120 L, 600 cells/3 mil). Thereafter, the catalyst was mounted on an automobile having an engine with a displacement of 2.0 L. Each automobile was driven in LA#4 mode, and then HC purification rate within the second hill of Bag.1 was measured. The results are shown in Table 1. Furthermore, the results of Examples 1 to 5 are shown in Fig. 4.

**[Table 1]**

| | Catalyst composition (Upper//Middle//Lower) | ^{1st}OSC:^{2nd}OSC (weight ratio) | HC purification rate (%) | |
|---|---|---|---|---|
| | | | Low temp. range 0∼500°C | High temp. range 500∼800°C |
| Ex. 1 | Pd//^{2nd}OSC//Rh,^{1st}OSC | 1:1 | 80 | 80 |
| Ex. 2 | Pd//^{2nd}OSC//Rh,^{1st}OSC | 3:1 | 90 | 53 |
| Ex. 3 | Pd//^{2nd}OSC//Rh,^{1st}OSC | 2:1 | 85 | 75 |
| Ex. 4 | Pd//^{2nd}OSC//Rh,^{1st}OSC | 1:3 | 50 | 88 |
| Ex. 5 | Pd//^{2nd}OSC//Rh,^{1st}OSC | 1:2 | 76 | 84 |
| Ex. 6 | Pd//Rh,^{1st}OSC//^{2nd}OSC | 1:1 | 85 | 75 |
| Ex. 7 | Pd//^{2nd}OSC//Rh,^{1st}OSC | 1:1 | 70 | 81 |
| Ex. 8 | Pd//^{2nd}OSC//Rh,^{1st}OSC | 1:1 | 79 | 71 |
| Ex. 9 | Pd//^{2nd}OSC//Rh,^{1st}OSC | 1:1 | 71 | 70 |
| Comp. Ex.1 | Pd // - // Rh,^{1st}OSC | - | 89 | 38 |
| Comp. Ex.2 | Pd // ^{2nd}OSC // Rh - | - | 38 | 87 |

### <OSC evaluation test>

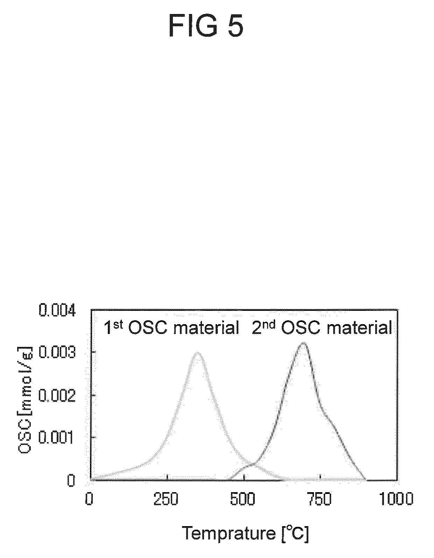

A durability test was conducted for the catalyst for exhaust gas purification produced in Example 1 at 1000°C for 10 hours using mixed gas containing carbon monoxide and oxygen. The catalyst was then measured using temperature-programmed reduction (TPR). The result is shown in Fig. 5.

### Explanation of symbols

- 1:: Catalyst for exhaust gas purification
- 2:: Substrate
- 3:: Lower catalytic layer
- 4:: Non-catalytic layer
- 5:: Upper catalytic layer

All publications cited herein are incorporated herein by reference in their entirety.

## Claims

1. A catalyst for exhaust gas purification, containing a substrate, a lower layer disposed on the substrate, and an upper layer disposed on the lower layer, wherein
the lower layer contains:
a lower catalytic layer that contains a first material having oxygen storage/release capacity and a first catalytic metal supported on the first material, and
a non-catalytic layer that contains a second material having oxygen storage/release capacity but does not contain a catalytic metal,
wherein the lower catalytic layer and the non-catalytic layer are laminated in any order; and
the upper layer contains an upper catalytic layer that contains a second catalytic metal.

2. The catalyst for exhaust gas purification according to claim 1, wherein the non-catalytic layer is disposed on the lower catalytic layer.

3. The catalyst for exhaust gas purification according to claim 1, wherein the lower catalytic layer is disposed on the non-catalytic layer.

4. The catalyst for exhaust gas purification according to any one of claims 1 to 3, wherein the first material having oxygen storage/release capacity and the second material having oxygen storage/release capacity are materials each having a pyrochlore structure.

5. The catalyst for exhaust gas purification according to claim 4, wherein the materials each having a pyrochlore structure are cerium-zirconium composite oxides.

6. The catalyst for exhaust gas purification according to any one of claims 1 to 5, wherein the first catalytic metal is rhodium and the second catalytic metal is palladium and/or platinum.
